# EUROPEAN PATENT APPLICATION

(11) **EP 0 682 271 A1**
(43) Date of publication of application: **15.11.1995**
(21) Application number: 95106965.7
(22) Date of filing: 09.05.1995
(51) Int. Cl.: G02B 1/04

(54) **Optical devices and method for their fabrication**

(30) Priority: 13.05.1994 JP 99871/94
(71) Applicant: DOW CORNING ASIA, Ltd., Tokyo 105 (JP)
(72) Inventor: Kushibiki, Nobuo, Dow Corning Asia, Lim., Sumitomo, Minato-ku, Tokyo 105 (JP); Ogawa, Takuya, Dow Corning Asia, Lim., Sumitomo, Minato-ku, Tokyo 105 (JP); Sugata, Yoko, Dow Corning Asia, Lim., Sumitomo, Minato-ku, Tokyo 105 (JP); Suzuki, Toshio, Midland, Michigan 48642 (US)
(74) Representative: Sternagel, Hans-Günther, Dr.

(57) **Abstract**

Optical devices are introduced which are prepared from silicon-based polymers that can be processed by molding methods widely known in the field of resin processing. The lenses are composed of silicon-based resin in which RSiO_{3/2} (R represents organic substituents) is the main structural unit and 10 to 99.99 mole% of the pendant, silicon-bonded substituents are aromatic groups. The silicon-based resin has a transmittance of at least 88% in the 400 to 850 nm wavelength region, an elastic modulus in flexure of at least 50 MPa, and a heat distortion temperature of at least 200°C.

## Description

This invention relates to optical devices for optical and electrooptical applications.

Demand has recently increased for optical devices in shapes that are difficult to fabricate by conventional grinding methods. For example, aspherical optical devices and microlenses have resulted in the active consideration of more highly moldable polymers for these specific applications. Thermoplastic resins, such as polymethyl methacrylate, polycarbonate, and the like, are already used for the fabrication of optical components. Polyolefin-based resins for optical applications have also been developed recently. Many of these materials are superior to glass in terms of properties characteristic of plastics, such as low weight and processability, but are not optically superior to glass. Even with polyolefin-based resins, the main emphasis is on improving the shortcomings of conventional resins in the areas of heat resistance, moisture absorption, and birefringence.

However, much of the birefringence exhibited by the amorphous polymers used in optical applications is caused more by the flow birefringence produced during the molding process, rather than by the molecular structure. Improving the flow characteristics of thermoplastic polymers to address this problem requires a reduction in molecular weight and a broadening of the molecular weight distribution.

For silicone polymeric materials, which are recognized as having excellent optical properties, the polydimethylsiloxane rubbers are used in specialty applications such as oxygen-permeable contact lenses, varifocal lenses based on transparent elastic bodies, and the like. There are, however, no reports of the application of silicone polymeric materials to general geometric optical devices, such as lenses, prisms, and the like, where mechanical strength is required. Within the realm of other silicone materials, one finds only the use of so-gel reaction products (obtained by the hydrolysis and condensation of tetrachlorosilane, tetraalkoxysilane, etc.) for a variety of coatings, of which hard coatings are the most important example. Another use is the production of quartz glass by firing the porous material obtained by the gradual removal of solvent and drying. At present, however, no silicone optical materials are known that can be used for the molding of optical devices by standard resin processing techniques.

The present invention provides optical devices that are free of birefringence and exhibit a mechanical strength and heat resistance sufficient to resist external stresses. A method for fabricating these optical devices is also provided.

The present invention consists of optical devices that are comprised of cured silicon-based resin in which RSiO_{3/2} (R represents organic substituents) is the main structural unit and aromatic groups make up 10 to 99.99 mole% of the pendant, silicon-bonded substituents. This silicon-based resin has a transmittance of at least 88% in the 400 to 850 nm wavelength range, an elastic modulus in flexure of at least 50 MPa, and a heat distortion temperature of at least 200°C.

These optical devices can be fabricated by the curing of a crosslinkable, silicon-based polymer in which RSiO_{3/2} (R is an organic substituent) is the main structural unit, and aromatic groups make up 10 to 99.99 mole% (preferably 50 to 99.99 mole%) of the pendant, silicon-bonded substituents. At least a portion of the remaining substituents consists of a crosslinkable functional group wherein the curing proceeds through the crosslinkable functional group. The crosslinkable, silicon-based polymer may contain minor amounts of siloxane units which are not fully condensed or which have hydrogen, hydroxyl or amino groups bonded to silicon. The means for inducing crosslinking can be a physical means such as exposure to electromagnetic radiation, or a chemical means.

The requirement that RSiO_{3/2} constitute the main structural unit of the silicon-based polymer and the cured resin formed therefrom means that at least 50% of the silicon atoms that make up the polymer or cured resin occur in the form of RSiO_{3/2}.

The preparative method of the present invention employs condensation polymers that are principally composed of trifunctional structural units: these are the polymeric materials generally known as "silicone resins" and are generally considered to include cage and ladder structures. Phenyl, naphthyl, and their alkyl-substituted derivatives are the most desirable aromatic substituents because they afford excellent optical properties in combination with good mechanical strength.

These polymers are synthesized through the simultaneous execution of condensation and hydrolysis, in organic solvent or without solvent, by the addition of a suitable amount of water to a silane bearing 3 hydrolyzable substituents, and/or monosubstituted silane plus optional monofunctional hydrolyzable silane or difunctional hydrolyzable silane. Copolymerization is preferably run by adjusting the addition of crosslinkable group-substituted silane in such a manner that the crosslinkable group constitutes 0.01 to 40 mole% of the pendant substituents in the polymer. This should be done taking into account the reactivity of the crosslinkable group-substituted silane.

The crosslinkable group concentration should be based on the degree of polymerization and the flow properties of the target resin, and also on the mechanical properties of the cured resin. In general, the resin will have a lower strength at lower degrees of crosslinking and will have a lower toughness at higher degrees of crosslinking. It therefore becomes problematic to specify the crosslinkable group concentration. However, the optimal molecular weights for the fabrication of optical devices having balanced processability, mechanical strength, and optical properties are those molecular weights that give a viscosity no greater than 10,000 cP (MPa.s), and preferably no greater than 5,000 cP (MPa.s), in the temperature interval from the melting point to the decomposition temperature. At above 10,000 cP (MPa.s), resin flow during molding will produce birefringence and it is difficult to relax the strain accompanying flow while also maintaining desirable molding conditions.

The functional groups that participate in the crosslinking reaction in our invention encompass not only those functional groups that are generally employed in organosilicon chemistry, but also those functional groups which are used for the production of thermosetting resins within the sphere of organic polymeric resins. The type of crosslinking reaction is selected based on such factors as the shape of the optical device, the operating conditions for the lens, and the conditions under which the lens is molded. Generally preferred, however, are addition reaction systems which do not evolve volatile low molecular weight compounds during the development of the reaction during molding. Preferred examples of such functional groups are the -SiH/vinyl system, the hydroxyl/isocyanate system, the epoxy/amine or acid anhydride system, and so forth. Also preferred are the light- and peroxide mediated reactions of the vinyl group. Substances that catalyze or retard the particular reaction, whose use is known in practice, may also be added.

The crosslinking reaction need not consist of the reaction of polymeric reactants bearing different substituents, and crosslinking may be carried out based on difunctional or polyfunctional low molecular weight molecules. For example, carbinol-functional polymer can be crosslinked through the addition of xylidene diisocyanate, cyclohexane diisocyanate, and so forth.

After this polymer has been mixed with the crosslinking molecules or polymers, the optical device can be molded by known molding techniques such as compression molding, injection molding, and so forth. The viscosity at this point preferably does not exceed 10,000 cP (MPa.s). However, the optimal viscosity varies with the particular molding method, and a suitable viscosity should be selected within the aforesaid range. The molding of a high viscosity resin produces unsatisfactory optical devices because the streaming and flow marks produced in the resin during molding remain unrelaxed in the lens with the resulting appearance of birefringence.

With regard to the optical properties of resin of our invention, the cured resin must have a transmittance of at least 88% in the 400 to 850 nm wavelength region. The refractive index homogeneity and birefringence of this invention were measured at the d-line wavelength (587.6 nm) using a known optical glass (BK-7) for comparison. The width of the refractive index distribution (the peak width at half the maximum value) for BK-7 glass is
4 x 10⁻⁶, while this parameter for our optical resin is
4 x 10⁻⁴, or two orders of magnitude larger. Nevertheless, although the optical resin of the invention is a phenyl-containing resin, it is comparable to optical-grade acrylic resin.

Although dependent on the method of cure, the modulus of elasticity in flexure at 25°C of the cured resin is at least 50 MPa. An excellent heat resistance is additionally required for our resin. Since optical devices must be fixed in a particular position when installed in the end-use optical system, the lenses must be mechanically strong that stresses generated during installation do not produce strain within the lens and do not deform its optical surface. This is a major point of difference from the characteristics required of the contact lenses worn by humans. For lenses used in optical systems, the required surface accuracy is less than or equal to 1 micrometer for camera lenses, and less than or equal to 0.1 micrometer for CD players. Although the perturbations or aberrations in an optical surface directly affect image quality, it is reported that a surface accuracy roughly on the level of 10 micrometers is entirely satisfactory for contact lenses due to processing of the image data by the human brain.

The heat distortion temperature of the present invention is very important for preventing distortion of the optical surface that would accompany thermal distortion of our resin. This resin also exhibits the following distinctive features by virtue of its thermosetting character: the absence of a distinct transition point in the temperature range from -50 to 200°C (the general range of application) that could affect the surface accuracy, and the absence at high temperatures of distortion due to molecular flow in resins.

The optical device of this invention, because they consist of a crosslinked silicone-type resin, exhibit the following characteristic features: they do not absorb light in the visible region; they have an inherently low water absorption and hygroscopicity; and they are very resistant to environmental degradation. In addition, because it is crosslinked, our optical device has the desirable optical property of evidencing little change in refractive index with changes in temperature. Moreover, due to our use of polymer that has a lower molecular weight than that of thermoplastic resin, the lens has a very low molding-induced birefringence.

### Reference Example

This example, in which Ph = phenyl, Vi = vinyl, and Me = methyl, describes our silicone resin synthesis. A flask was charged with 70 mL toluene and 160 mL water. A mixture of 63 g of phenyltrichlorosilane and 9 g of dimethylvinylchlorosilane was then slowly added dropwise to this flask with thorough stirring. After addition, the mixture was heated under reflux for approximately 1 hour, and the organic phase was then separated and washed with water. The water was subsequently azeotropically eliminated. This was followed by the addition of 0.2 g of potassium hydroxide and heating for 2 hours under reflux while azeotropically eliminating the water. Dimethylvinylchlorosilane was then added until the system reached neutrality and the solids were removed by filtration. Distillation of the toluene from the solution yielded a transparent silicon-based polymer in the form of a solid. Analysis of this polymer gave a PhSiO_{3/2} unit to ViMe₂SiO_{1/2} unit ratio of 4 : 1 and a weight average molecular weight of 1200.

### Example 1

Phenyltris(dimethylsiloxy)silane was mixed with the silicon-based polymer prepared in the Reference Example to give a vinyl group (in the polymer) to SiH group (in the silane) molar ratio of 1 : 1. A catalytic quantity (10 ppm of platinum based on the total weight of the resin formualtion) of tris(tetramethyldivinyldisiloxane)diplatinum(0) was then added. A viscosity of 4,000 cP (MPa.s) was measured at 50°C for the resulting uncured resin mixture using a Model E viscometer of Tokyo Keiki Kabushiki Kaisha. The mixture was poured into a V-block prism mold and cured at 80°C to fabricate a prism with a side length of 1 cm. The phenyl group made up 52 mole% of the silicon-bonded substituents in the cured resin constituting this prism.

The refractive index of the prism at 587.6 nm and 23°C was measured using a Model KPR-2 precision refractometer of Karunyuu Kogaku Kogyo Kabushiki Kaisha and making optical contact with polyphenylmethylsiloxane (n_{d} = 1.5305). The central refractive index was 1.5378 and the Abbe number was 34.5. The refractive index distribution (peak width at half the maximum value) was 4 x 10⁻⁴.

### Comparative Example

Polymer prepared according to the Reference Example was mixed with phenyltris(dimethylsiloxy)silane as in Example 1, and tris(tetramethyldivinyldisiloxane)diplatinum(0) was added in a catalytic quantity that was one-third that of Example 1. The mixture was then held at room temperature until the viscosity reached 11,000 cP (MPa.s). A prism was fabricated from this as described in Example 1, the width of the refractive index distribution for this prism was measured at 0.05.

### Example 2

A flat cured resin plate (1 cm x 4 cm x 0.5 cm) was fabricated by injection molding (at 80°C) the uncured resin mixture described in Example 1. The phenyl group made up 52 mole% of the pendant, silicon-bonded substituents in this resin. The light transmittance of this flat cured resin plate was measured within the range from 400 to 850 nm using a UV/visible spectrophotometer (Hitachi® Auto-Recording Spectrophotometer). The plate was completely free of absorption bands in the region from 400 to 850 nm, and the transmittance was 91% without index matching.

The flexural modulus of elasticity of the resin plate was measured according to ASTM D 790 at 1 GPa. The heat distortion temperature was measured based on JIS K 7202, and no heat distortion was found up to 200°C.

## Claims

1. A method of fabricating an optical device having a transmittance of at least 88% in the 400 to 850 nm wavelength range, an elastic modulus in flexure of at least 50 MPa, and a heat distortion temperature of at least 200°C, the method comprising curing a silicon-based polymer containing at least 50 mole percent RSiO_{3/2} structural units where R represents organic substituents, with the proviso that 10 to 99.99 mole percent of pendant, silicon-bonded substituents of the silicon-based polymer are aromatic groups and 0.01 to 40 mole percent of all pendant silicon-bonded substituents of the silicon-based polymer are crosslinkable functional groups.

2. The method of claim 1 wherein the silicon-based polymer has a viscosity no greater than 10,000 cP in the temperature interval from its melting point to its decomposition temperature

3. The method of claim 1 wherein R represents organic subtituents independently selected from methyl, phenyl, naphthyl, and vinyl and the aromatic groups are independently selected from phenyl or naphthyl.

4. The method of claim 3 wherein R represents phenyl, the silicon-based polymer further contains dimethylvinylsiloxane units, 50 to 99.99 mole percent of the pendant, silicon-bonded substituents of the silicon-based polymer are phenyl groups, and 0.01 to 40 mole percent of all pendant silicon-bonded substituents of the silicon-based polymer are vinyl groups.

5. The optical device obtainable by any of the methods of claims 1-4.
